# EUROPÄISCHE PATENTANMELDUNG

(11) **EP 1 386 883 A1**
(43) Veröffentlichungstag der Anmeldung: **04.02.2004**
(21) Anmeldenummer: 03017288.6
(22) Anmeldetag: 30.07.2003
(51) Int. Cl.: C01B 3/38, C01B 3/58, H01M 8/06

(54) **Reformer-Brennstoffzellen-System und Verfahren zum Abschalten und Starten desselben**

(30) Priorität: 02.08.2002 DE 10235430
(71) Anmelder: Truma Gerätetechnik GmbH & Co., 85640 Putzbrunn (DE)
(72) Erfinder: Armbruster, Uwe, 80689 München (DE); Hübner, Peter, 79111 Freiburg (DE); Ströhl, Helga, 81373 München (DE)
(74) Vertreter: Müller - Hoffmann & Partner

(57) **Zusammenfassung**

Beim Herunterfahren eines Reformer-Brennstoffzellen-Systems besteht das Problem, dass restlicher Wasserstoff in der Brennstoffzelle (3) verbleiben kann und unkontrolliert mit Sauerstoff aus der Umgebung reagiert oder anderweitig mechanischen Schaden in der Brennstoffzelle (3) auslöst. Ebenso kann in der Brennstoffzelle (3) vorhandener Wasserdampf zu Schädigungen der Zelle führen. wenn die Brennstoffzelle in eine Umgebung unterhalb des Gefrierpunkts gelangt und das Wasser im Inneren der Brennstoffzelle (3) kristallisiert. Zur Lösung des Problems wird vorgeschlagen, den Reformer (1) außer zur Erzeugung eines wasserstoffhaltigen Gases für den Normalbetrieb der Brennstoffzelle (3) wahlweise auch zur Erzeugung eines inerten Gases zu betreiben. Das inerte Gas kann beim Abschalten des Systems zur Spülung der Brennstoffzelle (3) und damit Entfernen des reaktionsfreudigen Wasserstoffs verwendet werden. Danach werden der Reformer (1) und die Brennstoffzelle (3) mit Luft gespült, um in dem System befindliches Wasser aus der Anlage herauszutransportieren. Damit kann die Betriebssicherheit, insbesondere bei Temperaturen unter dem Gefrierpunkt, gesteigert werden.

## Beschreibung

Die Erfindung betrifft ein Reformer-Brennstoffzellen-System sowie ein Verfahren zum Abschalten und ein Verfahren zum Starten des Reformer-Brennstoffzellen-Systems.

Brennstoffzellen sind elektrische Stromquellen, in denen durch elektrochemische Oxidation einer leicht oxidierbaren Substanz, meist Wasserstoff mit Sauerstoff, chemische Energie in elektrische Energie umgewandelt wird. Aufgrund der geringen Spannung, die eine einzelne Brennstoffzelle liefert, müssen gewöhnlich viele Brennstoffzellen zu einer größeren Brennstoffzelleneinrichtung zusammengeschaltet werden. Nachfolgend soll der Begriff "Brennstoffzelle" gleichermaßen eine einzelne Brennstoffzelle, aber auch einen Zusammenschluss von mehreren Brennstoffzellen, z. B. eine Brennstoffzellen-Batterie, umfassen. Der Begriff "Brennstoffzelle" ist daher nicht einschränkend auf eine einzige Brennstoffzelle zu beziehen.

Vor allem bei mobilen Brennstoffzellen ist der Brennstoffzelle ein Brennstoffreformer (nachfolgend als Reformer bezeichnet) vorgeschaltet, in dem kohlenwasserstoffhaltige Brennstoffe (z. B. Erdgas, Methanol, Propan, Benzin, Diesel) durch autotherme Reformierung oder partielle Oxidation mit Wasser, Sauerstoff bzw. Umgebungsluft bei hohen Temperaturen in wasserstoffreiche Gase überführt werden. Die kohlenwasserstoffhaltigen Brennstoffe lassen sich leichter handhaben, speichern und transportieren und sind zudem sicherer als gasförmiger Wasserstoff. Eine aus einem Reformer und einer Brennstoffzelle (bzw. vielen Brennstoffzellen) gebildete Vorrichtung wird nachfolgend als Reformer-Brennstoffzellen-System bezeichnet. Bestandteil dieses Systems können darüber hinaus weitere Einrichtungen sein, die an sich bekannt sind.

Die Brennstoffzelle besteht aus einem Elektrolyten, wie z. B. einer Ionenaustauschermembran, je einer Gasdiffusionsschicht für Anode und Kathode sowie Gasverteilungskanälen, die an der Anode bzw. Kathode vorgesehen sind.

Die Brennstoffzelle wird wegen des erzielbaren hohen Wirkungsgrades und der schadstoffarmen Technik als besonders zukunftsträchtige Energiequelle eingeschätzt. Da ihr Funktionsprinzip, wie auch die Arbeitsweise des Reformers, in der Fachwelt gut bekannt ist, erübrigt sich eine nähere Beschreibung. Eine derartige Brennstoffzelle eignet sich z. B. zum Erzeugen einer elektrischen Leistung von 1 kW.

Beim Abschalten bzw. Herunterfahren eines Reformer-Brennstoffzellen-Systems hat es sich als problematisch erwiesen, dass immer eine Restmenge an wasserstoffhaltigem Reformatgas (Reformer-Produkt) in der Brennstoffzelle verbleibt. Dies führt dazu, dass bei unkontrolliertem Ausdiffundieren von Wasserstoff und Vermischen mit Sauerstoff oder Umgebungsluft Knallgas entstehen kann. Außerdem können die im Inneren der Brennstoffzelle vorhandenen Ionenaustauschermembranen durch das Absinken des Gasdrucks auf der Anodenseite (durch die die Wasserstoff-Ionen diffundieren) mechanisch beschädigt werden.

Ein weiteres Problem besteht darin, dass die Brennstoffzelle mit einem feuchten, d. h. wasserhaltigem Reformatgas betrieben wird. Oftmals wird das Reformatgas sogar zusätzlich befeuchtet. Nach dem Abschalten des Systems kondensiert der Wasserdampf aus dem Reformatgas im Inneren der Brennstoffzelle, so dass sich bei weiterem Abkühlen der Brennstoffzelle Wassertröpfchen auf den Innenwänden bzw. Membranen der Brennstoffzelle niederschlagen können. Bei noch weiterem Abkühlen der Brennstoffzelle bis unter den Gefrierpunkt, was vor allem bei mobilen Brennstoffzellen in im Winter betriebenen Fahrzeugen zu erwarten ist, können die Wassertröpfchen einfrieren. Die dabei entstehenden Eiskristalle können die Ionenaustauschermembranen, die Gasdiffusionsschichten und sogar die Bipolarplatten und Gasverteilungskanäle aufgrund der Volumenvergrößerung der Wassertröpfchen beim Kristallisieren beschädigen.

Um die oben beschriebenen Wasserstoffreste bzw. das Wasser aus der Brennstoffzelle auszutragen, ist es bekannt, die Brennstoffzelle mit Stickstoff aus einem zusätzlich bereitgestellten Vorratsbehälter zu spülen. Eine Spülung der Brennstoffzelle mit Umgebungsluft ist nicht möglich, da der noch in der Brennstoffzelle vorhandene Wasserstoff unter Einwirkung der Katalysatorschicht der Ionenaustauschermembran sofort mit dem Luftsauerstoff reagieren würde, was zu einer Zerstörung der Brennstoffzelle führen würde. Das zusätzliche Bereitstellen von Stickstoff ist umständlich und aufwändig.

Der Erfindung liegt die Aufgabe zugrunde, ein Verfahren zum Abschalten eines Reformer-Brennstoffzellen-Systems bzw. ein Verfahren zum Unterstützen des Abschaltvorgangs anzugeben, bei dem die Brennstoffzelle nicht in der bekannten, aufwändigen Weise mit zusätzlich zuzuführendem Stickstoff gespült wird. Darüber hinaus ist ein Reformer-Brennstoffzellen-System sowie ein Reformer bereitzustellen, mit denen das Verfahren durchführbar ist.

Erfindungsgemäß wird die Aufgabe durch ein Verfahren gemäß Patentanspruch 6 zum Abschalten eines Reformer-Brennstoffzellen-Systems gelöst. Das Verfahren lässt sich in Umkehrung auch als Verfahren zum Starten eines Reformer-Brennstoffzellen-Systems gemäß Patentanspruch 12 einsetzen. Weiterhin wird der vorrichtungsmäßige Teil der der Erfindung zugrundeliegenden Aufgabe durch einen erfindungsgemäßen Reformer und ein erfindungsgemäßes Reformer-Brennstoffzellen-System gelöst. Vorteilhafte Weiterentwicklungen und Ausgestaltungen der Erfindung sind den abhängigen Ansprüchen zu entnehmen.

Da die Erfindung das Zusammenspiel eines Verfahrens mit einer geeigneten Vorrichtung betrifft, werden nachfolgend die Verfahren, der Reformer und das Reformer-Brennstoffzellen-System teilweise parallel beschrieben.

Der erfindungsgemäße Reformer zeichnet sich dadurch aus, dass er nicht nur in einer bekannten ersten Betriebsart zum Erzeugen von Wasserstoff durch unterstöchiometrische Reaktion von Kohlenwasserstoffen mit Sauerstoff, Luft und/oder Wasser betreibbar ist, sondern auch in einer zweiten Betriebsart zum Erzeugen eines inerten Gases oder Gasgemisches durch stöchiometrische Reaktion von Kohlenwasserstoffen mit Sauerstoff, Luft und/oder Wasser.

Diese Gestaltung des Reformers erlaubt es, das Reformer-Brennstoffzellen-System in zwei Betriebsarten zu betreiben, nämlich zum einen dem Normalbetrieb zum Erzeugen von Strom durch die Brennstoffzelle, in dem der Reformer wasserstoffhaltiges Gas erzeugt, und zum anderen dem Betrieb des Systems beim Abschalten bzw. Herunterfahren, in dem der Reformer das inerte Gas oder Gasgemisch erzeugt. In dem letzteren Fall wird die Brennstoffzelle mit dem inerten Gas oder Gasgemisch gespült, um Wasserstoffreste aus der Brennstoffzelle zu entfernen. Es erfolgt somit keine weitere Reaktion mehr in der Brennstoffzelle, da der dafür benötigte Sauerstoff nicht mehr zugeführt wird.

Der durch das inerte Gas ausgetragene Wasserstoff kann in einer nachgeschalteten Brennereinheit verbrannt werden. Die Brennereinheit dient im Übrigen dazu, auch im Normalbetrieb Wasserstoffreste, die aus der Brennstoffzelle strömen, zu verbrennen und somit für die Umgebung unschädlich zu machen. Die dabei entstehende Wärme kann zur Erwärmung von Räumen oder Wasser genutzt werden.

Bei einer bevorzugten Ausführungsform der Erfindung ist es möglich, das aus einem ersten Abschnitt des Reformers stammende Gasgemisch einer sog. Shift-Stufe und/oder einer selektiven Oxidation zu unterziehen, um möglicherweise vorhandene CO-Bestandteile zu entfernen.

Bei einer besonders vorteilhaften Variante des erfindungsgemäßen Verfahrens erfolgt das Spülen der Brennstoffzelle mit dem inerten Gas oder Gasgemisch nur über einen vorbestimmten Zeitraum, um den Wasserstoff aus der Brennstoffzelle zu entfernen. Danach wird die Brennstoffzelle mit Luft, z. B. Umgebungsluft, gespült, um die immer noch in der Brennstoffzelle vorhandene Feuchtigkeit auszutragen und somit die Bildung von Wassertröpfchen in der Brennstoffzelle zu vermeiden. Dies ist besonders deshalb zweckmäßig, weil auch das inerte Gas oder Gasgemisch eine hohe Feuchtigkeit aufweisen und somit zusätzlichen Wasserdampf in die Brennstoffzelle eintragen kann.

Besonders vorteilhaft ist es, wenn auch der Reformer zum Abschalten des Systems nach Abschluss des Erzeugens des inerten Gases mit Luft gespült wird, und dass mit dieser Luft danach die Brennstoffzelle gespült wird. Da sich die Luft in dem Reformer erwärmt, sinkt ihre relative Feuchtigkeit. Die Luft ist danach besonders gut geeignet, zusätzliche Feuchtigkeit aus der Brennstoffzelle aufzunehmen und nach außen zu transportieren.

Sofern das Reformer-Produkt oder das inerte Gas oder Gasgemisch nicht eine vorgegebene Qualität erreicht, ist es möglich, das Reformer-Produkt um die Brennstoffzelle, z. B. über eine Umgehungsleitung, herumzuführen.

Das Verfahren zum Abschalten des Reformer-Brennstoffzellen-Systems lässt sich in besonders vorteilhafter Weise auch umkehren und als Verfahren zum Starten eines derartigen Systems einsetzen.

Dabei wird der Reformer zunächst zur Erzeugung des inerten Gases oder Gasgemisches betrieben, welches die Brennstoffzelle über einen vorbestimmten Zeitraum spült. Hierdurch wird gewährleistet, dass sich bei der späteren Zuführung von wasserstoffhaltigem Reformatgas kein Luftsauerstoff in dem System befindet und es somit zu keiner unkontrollierten Reaktion zwischen dem zugeführten Wasserstoff und dem Sauerstoff kommen kann. Nach dem Spülen der Brennstoffzelle wird das Reformer-Produkt an der Brennstoffzelle vorbeigeführt, und die Reaktion im Reformer wird auf eine unterstöchiometrische Reaktion zum Erzeugen des wasserstoffhaltigen Gases oder Gasgemischs umgestellt. Nach Erreichen einer vorgegebenen Qualität des Reformer-Produkts wird das Reformer-Produkt mit dem wasserstoffhaltigen Gas in die Brennstoffzelle eingeleitet, so dass der Betrieb der Brennstoffzelle aufgenommen werden kann.

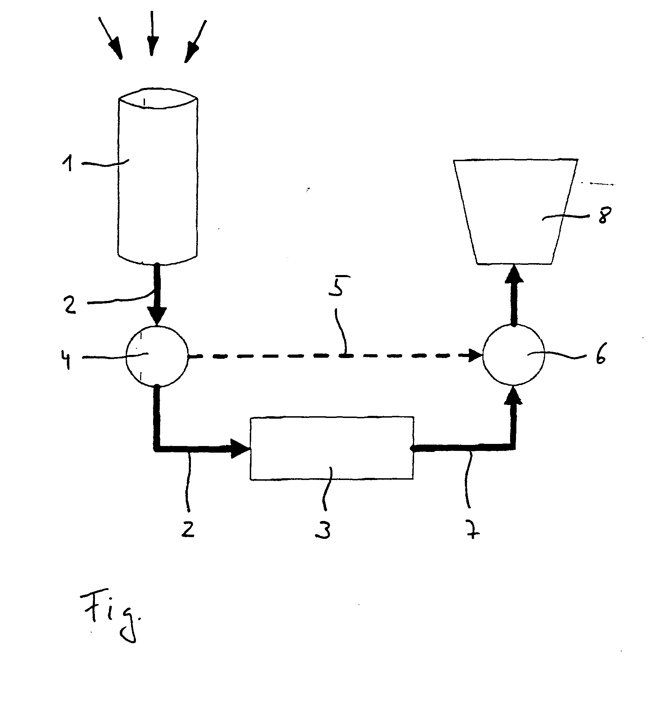

Diese und weitere Vorteile und Merkmale der Erfindung werden nachfolgend anhand eines Beispiels unter Zuhilfenahme der begleitenden Figuren näher erläutert. Die **einzige Figur** zeigt schematisch den Aufbau eines erfindungsgemäßen Reformer-Brennstoffzellen-Systems, wobei durch die Pfeile lediglich der anodenseitige Gasstrom dargestellt ist.

Da die Brennstoffzelle an sich nach einem bekannten Prinzip funktioniert, wird auf die Darstellung des kathodenseitigen Gasstroms sowie auf seine Erläuterung der Vorgänge im Inneren der Brennstoffzelle und des Reformers verzichtet.

In einem Reformer 1 wird ein kohlenwasserstoffhaltiger Brennstoff, z. B. Methanol, Benzin, Erdgas oder Propan, bei hohen Temperaturen in bekannter Weise in ein wasserstoffhaltiges Gas oder Gasgemisch überführt.

Das den Reformer 1 verlassende Gasgemisch wird nachfolgend auch als Reformer-Produkt bezeichnet. Es umfasst im Wesentlichen das wasserstoffhaltige Gas oder Gasgemisch, jedoch gegebenenfalls auch weitere Bestandteile, wie Wasser (Wasserdampf), Kohlendioxid (CO₂) oder Stickstoff. Das Reformer-Produkt kann weiterhin erfindungsgemäß - wie später beschrieben - auch ein inertes Gas oder Gasgemisch, ebenfalls mit Nebenbestandteilen, wie Wasserdampf oder Kohlendioxid umfassen. Der Begriff "Reformer-Produkt" wird daher verwendet, um den den Reformer 1 verlassenden Gasstrom insgesamt zu bezeichnen. Lediglich ein Teil des Reformer-Produkts betrifft den für den Betrieb der Brennstoffzelle relevanten Gasbestandteil, nämlich das wasserstoffhaltige Gas oder das inerte Gas.

In einer ersten Stufe des Reformers 1, die eine Reformerwabe oder einen Reformerkatalysator aufweist, wird das Reformer-Produkt (Reformatgas) erzeugt, das aber noch durch einen Kohlenmonoxid-Anteil verunreinigt sein kann. Daher ist in dem Reformer 1 eine sog. Shift-Stufe zum Entfernen des Kohlenmonoxids vorgesehen. Der Shift-Stufe kann eine weitere Stufe zur selektiven Oxidation nachgeschaltet sein, in der eine Feinreinigung des Reformer-Produkts erfolgt, um auch die Restbestandteile des Kohlenmonoxids zu entfernen. Die Wirkungsweise eines derartigen Aufbaus ist an sich bekannt, sodass sich eine nähere Beschreibung erübrigt.

Der Gasstrom wird von dem Reformer 1 über eine Leitung 2 zu einer Brennststoffzelle 3 geführt. Wie bereits dargelegt, dient der Begriff "Brennstoffzelle" zur Bezeichnung einer einzelnen Brennstoffzelle, aber auch eines Gesamtsystems von vielen Brennstoffzellen, die in der Praxis üblicherweise zusammengeschaltet werden, um eine ausreichende Spannung zur Verfügung zu stellen. In der Leitung 2 ist ein als Umschaltventil dienendes erstes Magnetventil 4 vorgesehen, mit dem der Gasstrom wahlweise über die Leitung 2 zur Brennstoffzelle 3 oder über eine Umgehungsleitung 5 an der Brennstoffzelle 3 vorbei geleitet werden kann.

Am Ende der Umgehungsleitung 5 ist ein ebenfalls als Umschaltventil dienendes zweites Magnetventil 6 in eine von der Brennstoffzelle herführende Leitung 7 eingebaut, mit der ebenfalls wahlweise ein Gasstrom von der Umgehungsleitung 5 oder von der Brennstoffzelle 3 zu einer Brennereinheit 8 geführt werden kann.

Die Brennereinheit 8 dient dazu, Wasserstoff, der entweder direkt von dem Reformer 1 über die Umgehungsleitung 5 oder aus dem Abgas der Brennstoffzelle 3 in Form von Rest-Wasserstoff herbeigeführt wird, zu verbrennen. Damit soll sichergestellt werden, dass kein Wasserstoff das Reformer-Brennstoffzellen-System verlassen und außerhalb der Anlage unkontrolliert mit Sauerstoff reagieren kann. Die durch die Brennereinheit 8 entstehende Wärme kann zum Beheizen von durch die Brennstoffzelle 3 betriebenen Einrichtungen, z. B. zum Erwärmen einer Fahrgastzelle in einem Fahrzeug, aber auch zum Erwärmen von Wasser verwendet werden. Sofern keine Wärme erforderlich ist, wird die Wärme über einen nicht dargestellten Abgaskamin an die Umgebung abgegeben.

In dem System sind weiterhin zur Erzeugung der erforderlichen Gasströme Gebläse, Ventilatoren und Verdichter, soweit erforderlich. vorgesehen. Deren Anordnung liegt im Ermessen des Fachmanns, so dass an dieser Stelle keine detaillierte Darstellung erfolgt.

Im Normalbetrieb der Brennstoffzelle 3, d. h. zur Stromerzeugung, wird der Reformer 1 in einer ersten Betriebsart betrieben. Dabei werden durch eine autotherme Reformierung Kohlenwasserstoffe (kohlenwasserstoffhaltige Brennstoffe) unterstöchiometrisch, z. B. mit λ = 0,3, mit Sauerstoff oder Luft und Wasser zu einem wasserstoffreichen Gasgemisch (Reformer-Produkt) umgesetzt. Das Gasgemisch kann noch vor Verlassen des Reformers 1, sofern es CO-Bestandteile enthält, z.B. mittels selektiver Oxidation einer Feinreinigung unterzogen werden. Danach wird das Gasgemisch der Brennstoffzelle 3 zugeführt.

Zum Abschalten der Anlage wird zunächst der nicht dargestellte Verbraucher, d. h. die elektrische Last, von der Brennstoffzelle 3 getrennt.

Dann wird der Reformer in einer zweiten Betriebsart betrieben, in der eine geringere Menge an Kohlenwasserstoffen stöchiometrisch, d. h. mit λ = 1, mit Sauerstoff oder Luft und eventuell noch unter Verwendung von Wasser zur Kühlung der Katalysatoren im Reformer 1 zu Kohlendioxid bzw. zu einem Kohlendioxid-Stickstoff-Gasgemisch umgesetzt wird.

Dieses nunmehr inerte Gas bzw. Gasgemisch wird zu der Brennstoffzelle 3 geführt und spült den in der Brennstoffzelle 3 zu Beginn noch vorhandenen Wasserstoff aus. Der Rest-Wasserstoff kann dann in der Brennereinheit 8 verbrannt werden. Da es sich bei dem Reformer-Produkt in der zweiten Betriebsart um ein inertes Gas handelt, besteht keine Gefahr, dass der Wasserstoff in der Brennstoffzelle 3 mit dem vom Reformer 1 stammenden Gasstrom reagieren könnte.

Soweit erforderlich, kann während des Wechsels der Betriebsarten, d. h. zu Beginn des Abschaltvorgangs, der Gasstrom vom Reformer 1 kurzzeitig über die Umgehungsleitung 5 an der Brennstoffzelle 3 vorbeigeführt werden, wenn bei der Umschaltung des Reformierungsprozesses von unterstöchiometrischer auf stöchiometrische Verbrennung die Gasqualität, z. B. wegen eines zu hohen CO-Anteils, nicht für das Durchleiten durch den Brennstoffzellenstapel geeignet ist.

Sofern jedoch der Reformer 1 eine ausreichende Gasqualität bereitstellt, kann der Gasstrom vom Reformer 1 während des Umschaltens kontinuierlich durch die Brennstoffzelle 3 geleitet werden.

Sofern der in der zweiten Betriebsart erzeugte Gasstrom vom Reformer 1 einen geringen Wasseranteil besitzt, eignet er sich auch dazu, das in der Brennstoffzelle 3 enthaltene Wasser auszutreiben.

Alternativ dazu ist es möglich, nach Ausleiten des Rest-Wasserstoffs aus der Brennstoffzelle 3 die Brennstoffzelle 3 mit Luft aus der Umgebung zu spülen. Die Spülung der Brennstoffzelle 3 mit dem inerten Gas sollte daher auf einen vorbestimmten Zeitraum begrenzt sein.

Alternativ dazu ist es auch möglich, das im Brennstoffzellenstapel enthaltene Wasser mit Luft auszutreiben, die vorher durch den Reformer 1 geleitet wird und auch dort Wasser aufnimmt. Dadurch wird gleichzeitig der Reformer 1 vor Beschädigung durch z. B. einfrierende Wassertröpfchen geschützt. Beim Spülen des Reformers 1 mit Luft besteht darüber hinaus die Möglichkeit, dass sich die Luft durch die Restwärme des Reformers 1 erwärmt, wodurch ihre relative Feuchtigkeit vermindert wird. Die Luft kann dementsprechend mehr Feuchtigkeit aus dem Reformer 1 einerseits und der Brennstoffzelle 3 andererseits aufnehmen und abführen.

Die Spülungsvorgänge erfolgen ebenfalls mit Hilfe von Kompressoren, Verdichtern oder Gebläsen.

Die Ansteuerung des Reformers 1 und der Brennstoffzelle 3 sowie gegebenenfalls der Magnetventile 4 und 6 kann durch den Bediener manuell vorgenommen werden. Alternativ sind dazu alle Steuerungsvorgänge auch von einer zentralen, nicht dargestellten Steuerung zu übernehmen, die zudem mit Hilfe geeigneter Sensoren die jeweils erforderlichen Gasqualitäten überwachen kann. Für die Überwachung der Gasqualität ist es insbesondere zweckmäßig, wenn der Wasserstoffanteil und der Kohlenmonoxidanteil in dem vom Reformer kommenden Gasstrom überwacht werden kann.

Der Wechsel der Betriebsarten des Reformers 1 erfolgt z. B. durch eine Veränderung der Zufuhr der "Rohstoffe" für den Reformer 1. Bei der unterstöchiometrischen Reaktion zur Erzeugung des wasserstoffhaltigen Gases wird dem Reformer 1 ein reduzierter Sauerstoffanteil zugeleitet, um nur gerade soviel Kohlenwasserstoffe zu verbrennen, damit genügend thermische Energie zur Verfügung steht, um die restlichen Kohlenwasserstoffe zu einem wasserstoffreichen Gasgemisch reformieren zu können. Bei der stöchiometrischen Reaktion hingegen wird eine vollständige Verbrennung der zugeführten Kohlenwasserstoffe erreicht, was zu Reaktions-Produkten wie Kohlendioxid, Wasserdampf, Stickstoff und, in geringem Maße, Kohlenmonoxid führt.

Das beschriebene Verfahren kann prinzipiell auch in umgekehrter Reihenfolge durchgeführt werden und eignet sich dann zum Starten bzw. Inbetriebnehmen des Reformer-Brennstoffzellen-Systems. Hierzu wird die Brennstoffzelle 3 zunächst mit inertem Gas aus dem Aufheizvorgang des Reformers 1 befüllt, wodurch der in der Brennstoffzelle 3 enthaltene Sauerstoff bzw. die Luft ausgetrieben wird. Nach dem Befüllen der Brennstoffzelle 3 wird der Gasstrom vom Reformer 1 an der Brennstoffzelle 3, z. B. über die Umgehungsleitung 5 vorbeigeführt und die Betriebsart im Reformer 1 verändert, bis der Reformer 1 wasserstoffhaltiges Gas in ausreichender Qualität für die Brennstoffzelle 3 erzeugt. Dann wird der Fluss des Gasstroms wieder geändert, so dass das wasserstoffhaltige Gas in die Brennstoffzelle 3 gelangen kann.

## Patentansprüche

1. Reformer für ein Reformer-Brennstoffzellen-System, wobei der Reformer (1) in einer ersten Betriebsart zum Erzeugen von Wasserstoff durch unterstöchiometrische Reaktion von Kohlenwasserstoffen mit Sauerstoff, Luft und/oder Wasser betreibbar ist, **dadurch gekennzeichnet, dass** der Reformer (1) in einer zweiten Betriebsart zum Erzeugen eines inerten Gases oder Gasgemisches durch stöchiometrische Reaktion von Kohlenwasserstoffen mit Sauerstoff, Luft und/oder Wasser betreibbar ist.

2. Reformer-Brennstoffzellen-System mit einem Reformer nach Anspruch 1, **dadurch gekennzeichnet, dass** der Reformer (1) mit einer Brennstoffzelleneinrichtung (3) verbunden ist, in die ein von dem Reformer (1) erzeugtes Reformer-Produkt einleitbar ist.

3. Reformer-Brennstoffzellen-System nach Anspruch 2, **dadurch gekennzeichnet, dass** der Brennstoffzelleneinrichtung (3) eine Brennereinheit (8) nachgeschaltet ist.

4. Reformer-Brennstoffzellen-System nach Anspruch 2 oder 3, **dadurch gekennzeichnet, dass** parallel zu der Brennstoffzelleneinrichtung (3) eine Umgehungsleitung (5) vorgesehen ist, an deren Eingang und Ausgang Umschaltventile (4, 6) derart vorgesehen sind, dass ein Gasstrom von dem Reformer (1) wahlweise durch die Brennstoffzelleneinrichtung (3) oder durch die Umgehungsleitung (5) leitbar ist.

5. Reformer-Brennstoffzellen-System nach einem der Ansprüche 2 bis 4, **dadurch gekennzeichnet, dass** in oder stromab von dem Reformer (1) und vor der Brennstoffzelleneinrichtung (3) eine Einrichtung zur selektiven Oxidation des Reformer-Produktes zum Entfernen von CO-Bestandteilen aus dem Produkt vorgesehen ist.

6. Verfahren zum Abschalten eines Reformer-Brennstoffzellen-Systems, mit den Schritten
- Betreiben des Reformers (1) zum Erzeugen eines inerten Gases oder Gasgemisches durch stöchiometrische Reaktion von Kohlenwasserstoffen mit Sauerstoff, Luft und/oder Wasser, wobei das inerte Gas oder Gasgemisch Bestandteil eines Reformer-Produktes ist;
- Spülen der Brennstoffzelle (3) mit dem inerten Gas oder Gasgemisch.

7. Verfahren nach Anspruch 6, **dadurch gekennzeichnet, dass** das Betreiben des Reformers (1) zum Erzeugen des inerten Gases oder Gasgemisches nach Trennen der Brennstoffzelle (3) von einer elektrischen Last erfolgt.

8. Verfahren nach Anspruch 6 oder 7, **dadurch gekennzeichnet, dass** das Spülen der Brennstoffzelle (3) mit dem inerten Gas oder Gasgemisch über einen vorbestimmten Zeitraum durchgeführt wird und dass danach die Brennstoffzelle (3) mit Luft gespült wird.

9. Verfahren nach Anspruch 8, **dadurch gekennzeichnet, dass** der Reformer (1) mit Luft gespült wird, und dass die Brennstoffzelle (3) mit der Luft gespült wird, mit der vorher der Reformer (1) gespült wurde.

10. Verfahren nach einem der Ansprüche 6 bis 9, **dadurch gekennzeichnet, dass** das Reformer-Produkt vor dem Eintreten in die Brennstoffzelle (3) einer selektiven Oxidation zum Entfernen von CO-Bestandteilen unterzogen wird.

11. Verfahren nach einem der Ansprüche 6 bis 10, **dadurch gekennzeichnet, dass** bei Nichterreichen einer vorgegebenen Qualität des Reformer-Produktes oder des inerten Gases oder Gasgemisches das Reformer-Produkt um die Brennstoffzelle (3) herumführbar ist.

12. Verfahren zum Starten eines Reformer-Brennstoffzellen-Systems, mit den Schritten
- Betreiben des Reformers (1) zum Erzeugen eines inerten Gases oder Gasgemisches durch stöchiometrische Reaktion von Kohlenwasserstoffen mit Sauerstoff, Luft und/oder Wasser, wobei das inerte Gas oder Gasgemisch Bestandteil eines Reformer-Produktes ist;
- Spülen der Brennstoffzelle (3) mit dem inerten Gas oder Gasgemisch über einen vorbestimmten Zeitraum;
- nach dem Spülen der Brennstoffzelle (3) Umleiten des Reformer-Produktes an der Brennstoffzelle (3) vorbei;
- Umstellen der Reaktion im Reformer (1) auf eine unterstöchiometrische Reaktion zum Erzeugen eines ein wasserstoffhaltiges Gas oder Gasgemisch enthaltenden Reformer-Produktes;
- nach Erreichen einer vorgegebenen Qualität des Reformer-Produkts Einleiten des Reformer-Produktes in die Brennstoffzelle (3).
